# NOUVEAU FASCICULE DE BREVET EUROPEEN

(11) **EP 0 913 658 B2**
(45) Date de publication et mention de la décision concernant l'opposition: **06.04.2005**
(45) Mention de la délivrance du brevet: 13.03.2002
(21) Numéro de dépôt: 98402492.7
(22) Date de dépôt: 07.10.1998
(51) Int. Cl.: F27D 21/00, C21D 9/56, C21D 9/573, G01M 3/26

(54) **Système de sécurité pour fours ayant un refroidissement à gaz pour bande métallique**
Sicherheitssystem für einen Ofen mit Gaskühlung für Metallband
Safety system for a furnace providing gas cooling for metal strip

(30) Priorité: 15.10.1997 FR 9712907
(43) Date de publication de la demande: 06.05.1999
(73) Titulaire: STEIN HEURTEY, F-91002 Evry Cedex (FR)
(72) Inventeur: Jodet, Gérard, 94100 Saint-Maur (FR); Nozières, Jean-Jacques, 92370 Chaville (FR)
(74) Mandataire: Peaucelle, Chantal

(56) Documents cités:
- EP-A- 0 182 050
- EP-A- 0 753 729
- EP-A- 0 795 616
- DE-C- 4 232 195
- US-A- 3 430 484
- US-A- 4 452 279
- US-A- 4 806 401
- Herning F.: 'Grundlagen und Praxis der Mengenstrommessung', 1959, VDI - Verlag, p. 3-5.
- ISDN 3-926934-04-1 de Witzenmann GmbH Metallschlauchfabrik, Pforzheim, 1990, p. 400 - 403

## Description

La présente invention concerne des perfectionnements apportés aux fours de refroidissement rapide pour matériaux en bande et plus particulièrement pour des bandes métalliques. Ces fours peuvent faire partie notamment d'installations de traitements tels que par exemple traitements thermiques de produits métalliques en bande, notamment de galvanisation, de recuit, de production de fer blanc, etc.

La présente invention concerne plus particulièrement un système de sécurité pour de tels fours de refroidissement rapide.

On connaît (EP-A-0 795 616) des installations destinées au traitement thermique de bandes métalliques en continu dans lesquelles la bande à traiter chemine au travers d'un four constitué d'une pluralité de sections de traitement thermique notamment de chauffage, de maintien, de recuit, de refroidissement, etc... Dans cette publication, la présente titulaire a préconisé l'utilisation d'enceintes, ou de chambre, de chauffage et/ou de refroidissement dans lesquelles règne une atmosphère constituée d'un mélange de gaz, à base d'hydrogène dont la teneur en hydrogène est supérieure aux valeurs habituellement admises, afin d'augmenter la vitesse de refroidissement. Ainsi, selon cette technique antérieure, on peut utiliser comme atmosphère dans l'enceinte de refroidissement, un mélange de gaz, notamment d'azote et d'hydrogène, présentant une teneur en hydrogène supérieure à 15% et pouvant atteindre 50%, c'est-à-dire supérieure à la valeur de limite d'explositivté de ce gaz.

Dans l'enceinte de refroidissement des installations mentionnées ci-dessus, le gaz d'atmosphère recyclé est soufflé sur la bande métallique en circulation continue, après refroidissement notamment à l'aide d'échangeurs thermiques gaz/eau, la composition du gaz d'atmosphère, et plus particulièrement sa forte teneur en hydrogène, permettant d'obtenir des vitesses de refroidissement très rapides de l'ordre de 100°C par seconde. Les installations comportent donc un circuit de gaines de recirculation du gaz d'atmosphère N₂, H₂, un ou plusieurs ventilateurs pour assurer la circulation continue de ce gaz de refroidissement dans les gaines de recirculation et des échangeurs gaz/eau.

Compte-tenu de la teneur très importante en hydrogène du gaz d'atmosphère utilisé lors du refroidissement rapide, on est amené à prendre de grandes précautions pour assurer la sécurité de l'installation ; en effet on ne peut pas tolérer une fuite, aussi minime soit-elle, du gaz d'atmosphère dans l'environnement, ni une introduction d'air à l'intérieur des gaines de recirculation.

La présente invention se propose d'apporter une solution à ce problème de sécurité, plus particulièrement dans le cas où viendrait à se produire le phénomène suivant : l'ensemble des gaines de circulation du gaz de refroidissement comporte des compensateurs qui permettent aux gaines de se dilater. Dans le cas d'une rupture d'onde d'un compensateur, ou d'une fuite de ce dernier, il est absolument nécessaire d'empêcher l'introduction d'air, c'est-à-dire d'oxygène, à l'intérieur du circuit de recirculation du gaz de refroidissement ou toute fuite de ce dernier vers l'environnement.

La présente invention résout le problème mentionné ci-dessus par les caractéristiques de la revendication 1. On positionne une membrane souple et étanche au gaz de refroidissement, autour de chaque compensateur de la gaine de recirculation, un moyen de détection de la rupture d'une onde de compensateur étant en outre prévu, ce moyen déclenchant immédiatement l'interruption de la circulation du gaz de refroidissement dans le circuit de recirculation de ce dernier.

Selon un mode de réalisation de la présente invention, ladite membrane souple et étanche au gaz de refroidissement est réalisée sous la forme d'une membrane textile, par exemple une membrane en silicone armé de fibres de verre.

Selon l'invention, le système de détection de la rupture d'une onde du compensateur, ou d'une fuite de ce dernier est réalisé sous la forme d'une circulation d'un gaz neutre sous pression, de préférence de l'azote, dans l'espace compris entre le compensateur et la membrane souple, étanche qui l'entoure, des moyens étant en outre prévus pour détecter toute variation de la pression de ce gaz neutre, consécutive à une fuite du gaz de refroidissement au travers du compensateur, afin de déclencher l'arrêt de la circulation dudit gaz dans les gaines de recirculation.

Selon un mode de réalisation de l'invention, chaque compensateur est pourvu d'un boîtier métallique, en forme de couronne circulaire entourant les ondes dudit compensateur, ce boîtier étant pourvu d'une ouverture circulaire obturée par ladite membrane souple et étanche, et il comporte des orifices d'admission et d'évacuation pour le gaz neutre qui est introduit sous pression entre les parois dudit boîtier et le compensateur, lesdits moyens de détection d'une variation de pression dudit gaz neutre étant positionnés sur ledit boîtier.

Selon la présente invention, les moyens permettant l'arrêt immédiat de la circulation du gaz de refroidissement dans les gaines de recirculation de ce gaz peuvent être du type décrit dans la demande de brevet déposée le même jour que la présente demande, par la même titulaire et intitulée « Perfectionnements apportés aux fours à refroidissement rapide pour bande métallique », c'est-à-dire un système de registre, placé en amont des échangeurs, sur la section de passage du gaz de refroidissement rapide et d'actionneurs à temps de réponse très court, c'est-à-dire inférieur à cinq secondes, qui commandent ledit système de registre afin de fermer ladite section de passage sous la commande desdits moyens de détection.

D'autres caractéristiques et avantages de la présente invention ressortiront de la description faite ci-après en référence aux dessins annexés qui en illustrent un exemple de réalisation dépourvu de tout caractère limitatif.

Sur les dessins:
- La figure 1 est une vue en perspective illustrant un exemple de réalisation d'un four de refroidissement rapide, avec ses gaines de soufflage et de recirculation du gaz d'atmosphère, auquel la présente invention peut être appliquée ;
- La figure 2 est une représentation schématique en coupe axiale du dispositif objet de la présente invention ;
- La figure 3 est une vue en plan représentant un compensateur muni du dispositif de sécurité selon l'invention, et,
- La figure 4 est une vue en coupe du détail A de la figure 3.

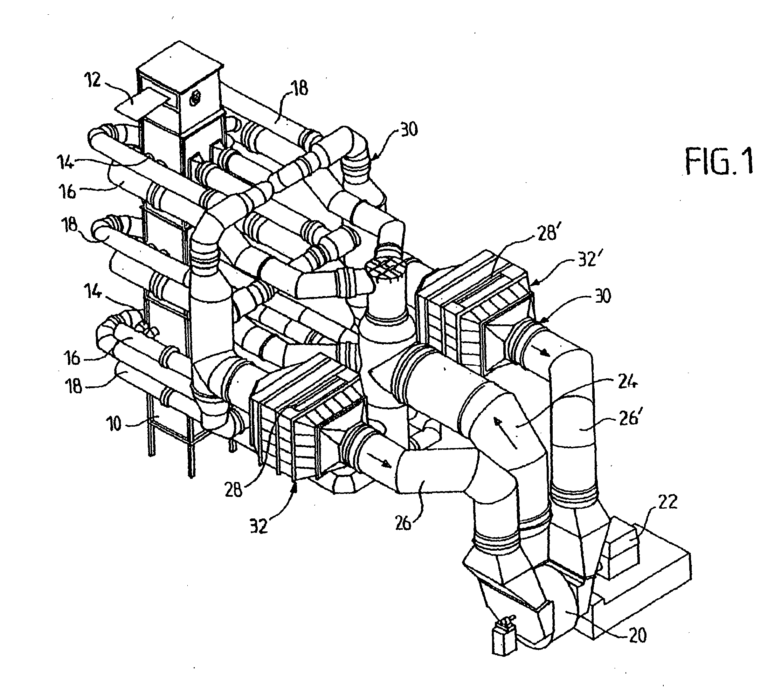

En se référant à la figure 1, on y voit une vue d'ensemble d'un four de refroidissement rapide auquel s'applique la présente invention. Ce four ou chambre de refroidissement fait en général partie d'une installation comportant une pluralité de postes de traitement de matériau en bande, cette installation pouvant être par exemple du type décrit dans EP-0 795 616 mentionné ci-dessus. Dans ce four désigné par la référence 10, circule en continu la bande métallique 12, cette bande provenant en général d'autres enceintes de traitement par exemple de traitements thermiques, de maintien, de recuit, etc.

Le refroidissement rapide est obtenu par projection sur la bande 12, en circulation continue, d'un jet de gaz d'atmosphère N₂, H₂, contenant ainsi qu'on l'a expliqué ci-dessus une proportion importante d'hydrogène, supérieure à 15% et pouvant aller jusqu'à 50%. Ce gaz d'atmosphère est projeté sur les faces latérales de la bande 12 par l'intermédiaire de buses telles que 14 alimentées par des gaines telles que 16 et il est repris à l'aide de gaines telles que 18 qui débouchent parallèlement au plan de la bande 12 dans la chambre de refroidissement rapide 10. La circulation du gaz d'atmosphère est obtenue à l'aide d'un ventilateur tel que 20, entraîné par un moteur électrique 22, le soufflage du gaz d'atmosphère s'effectuant par l'intermédiaire d'une gaine collectrice 24 alimentant les gaines 14 alors que la reprise de ce gaz d'atmosphère est réalisée par l'intermédiaire des gaines collectrices 26, 26' alimentées par les gaines 18.

L'installation comporte en outre, de manière connue, des échangeurs 28, 28', de préférence du type gaz/eau qui sont logés dans des enceintes désignées dans leur ensemble par la référence 32, respectivement 32', sur lesquelles débouchent les gaines de reprise 26, 26' du gaz d'atmosphère, afin de refroidir ce dernier, après circulation dans la chambre de refroidissement rapide 10 et avant reprise par le ventilateur 20 et soufflage au-travers des gaines 24 et 16. Selon une construction également connue, les différentes gaines 16, 18, 24, 26, 26' comportent des compensateurs 30, réalisés sous la forme d'une série d'ondes permettant à l'ensemble des gaines de se dilater.

Ainsi qu'on l'a expliqué ci-dessus, l'objectif de la présente invention est de renforcer la sécurité du circuit de recirculation du gaz de refroidissement rapide et de toute l'installation dans laquelle peut être implanté le four de refroidissement rapide 10, dans le cas d'une rupture d'onde d'un compensateur tel que 30, ceci afin de détecter et d'empêcher toute introduction d'air , c'est-à-dire d'oxygène, à l'intérieur du circuit en dépression dans lequel circule le gaz d'atmosphère (gaz de refroidissement rapide) composé d'un mélange d'azote et d'hydrogène dans lequel l'hydrogène présente une teneur en hydrogène pouvant atteindre 50%, ou toute fuite de ce gaz d'atmosphère vers l'environnement.

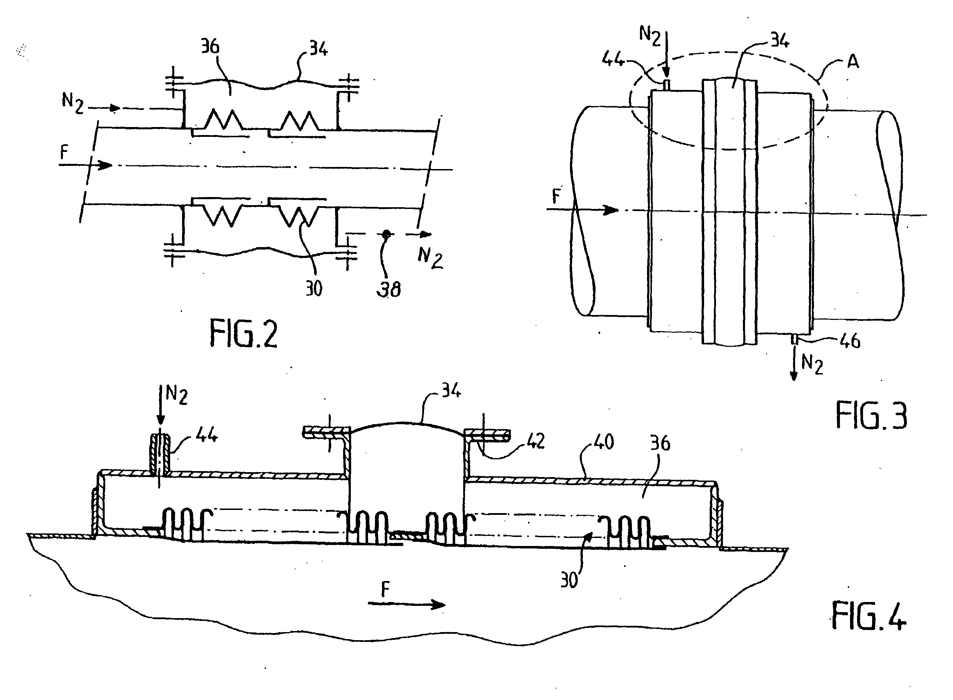

On se réfère maintenant aux figures 2 à 4 qui illustrent les moyens qui, selon l'invention apportent une solution aux problèmes ci-dessus.

Selon l'invention, on prévoit une membrane 34, souple et étanche au gaz de refroidissement qui est disposée autour de chaque compensateur 30, de façon à délimiter une enceinte 36 entourant les ondes de chaque compensateur 30 placé, ainsi qu'on l'a vu ci-dessus sur les différentes gaines de circulation du gaz de refroidissement. Sur les figures 2 à 4, la flèche F désigne le sens de circulation de ce gaz.

Selon une caractéristique du dispositif objet de l'invention, on maintient dans cette enceinte 36, une circulation d'un gaz neutre sous pression, notamment d'azote, comme illustré, de façon schématique, sur la figure 2. En cas de fuite du compensateur 30, par exemple lors de la rupture d'une onde de ce dernier, il se produit une variation de la pression de ce gaz neutre dans l'enceinte 36 et l'invention prévoit un détecteur 38 placé sur ladite enceinte 36 qui réagit à cette variation de pression pour déclencher l'arrêt de la recirculation du gaz de refroidissement dans les gaines 16, 18, 26, 26', 24 du circuit de recirculation de ce gaz, illustrées par la figure 1.

Selon la présente invention, les moyens permettant de déclencher immédiatement l'arrêt de la recirculation du gaz de refroidissement sont de préférence du type décrit dans la demande déposée conjointement à la présente demande, par la présente titulaire et intitulée « Perfectionnements apportés aux fours à refroidissement rapide pour bande métallique ». Comme décrit dans cette demande conjointe, ces moyens consistent à prévoir un système de registre, placé en amont des échangeurs, sur la section de passage du gaz de refroidissement et des actionneurs à temps de réponse très court, inférieur à cinq secondes qui commandent ledit système de registre pour fermer ladite section de passage, sous la commande du détecteur 38.

Les figures 3 et 4 représentent un mode de réalisation pratique du dispositif selon l'invention. On voit sur ces figures 3 et 4 que les ondes du compenseteur sont entourées par un boîtier métallique 40 en forme de couronne circulaire, de préférence en acier comportant un système de collerettes 42 pour la fixation de la membrane 34. Cette dernière est de préférence une membrane textile pouvant être, par exemple réalisée en silicone armé de fibres de verre, le silicone assurant l'étanchéité vis-à-vis des gaz et les fibres de verre communiquant à la membrane, la résistance mécanique nécessaire. Ce boîtier comporte des orifices d'admission 44 et d'évacuation 46 du gaz neutre sous pression, notamment d'azote qui circule dans son enceinte 36. Le système de détection 38 mentionné ci-dessus est également positionné sur ledit boîtier.

Le boîtier 40 peut être réalisé de façon à être facilement démontable. Ainsi, en cas de fuite du gaz de refroidissement, il est possible d'intervenir sur le compensateur défectueux afin de le réparer ou de le remplacer.

On comprend de la lecture de la description qui précède que la présente invention permet effectivement et efficacement de renforcer la sécurité d'un four de refroidissement rapide mettant en oeuvre un gaz de refroidissement à haute teneur en hydrogène, en détectant et en empêchant toute introduction d'air (c'est-à-dire d'oxygène) à l'intérieur du circuit en dépression de recirculation du gaz de refroidissement ou toute fuite de ce dernier vers l'environnement.

Il demeure bien entendu que la présente invention n'est pas limitée aux exemples de réalisation décrits et/ou représentés mais qu'elle en englobe toutes les variantes qui entrent dans le cadre de la portée des revendications annexées

## Revendications

1. Four à refroidissement rapide, pouvant faire partie d'une installation comportant divers postes de traitement, notamment de traitement thermique de produits en bande, dans lequel circule en continu une bande métallique (12), le refroidissement rapide étant obtenu par projection sur la bande d'un jet de gaz d'atmosphère constitué d'un mélange d'azote et d'hydrogène présentant une teneur en hydrogène supérieure à 15%, et de préférence voisine de 50%, la recirculation du gaz d'atmosphère étant assurée à l'aide d'un circuit de gaines de recirculation (16, 18, 26, 26', 24) comportant des compensateurs (30) réalisés sous la forme d'une série d'ondes permettant à l'ensemble de gaines de se dilater, au moins un ventilateur (20) ainsi qu'au moins un échangeur gaz/eau (28, 28'), ce four (10) étant **caractérisé en ce qu'**il comporte un dispositif de sécurité permettant d'empêcher l'introduction d'air à l'intérieur du circuit de recirculation du gaz de refroidissement, ou toute fuite de ce dernier dans l'environnement, en cas de rupture d'onde d'un compensateur (30), ou en cas d'une fuite de ce dernier, ce dispositif étant réalisé sous la forme d'une membrane (34) souple et étanche au gaz de refroidissement, ladite membrane étant disposée autour de chacun des compensateurs (30) de la gaine de recirculation, un moyen (38) étant en outre prévu pour déclencher immédiatement l'interruption de la circulation du gaz de refroidissement dans son circuit de recirculation, et **en ce que** le système de détection de la rupture d'une onde du compensateur (30) ou d'une fuite de ce dernier est réalisé sous la forme d'une circulation d'un gaz neutre sous pression, de préférence de l'azote, dans l'enceinte (36) comprise entre le compensateur et la membrane souple, étanche (34) qui l'entoure; des moyens (38) étant en outre prévus sur cette enceinte pour détecter toute augmentation du débit de ce gaz neutre consécutive à une fuite du gaz de refroidissement au travers du compensateur, afin de déclencher l'arrêt de la circulation dudit gaz dans les gaines de recirculation.

2. Four selon la revendication 1, **caractérisé en ce que** chaque compensateur (30) est pourvu d'un boîtier métallique (40), de préférence en acier en forme de couronne circulaire entourant les ondes dudit compensateur, ce boîtier étant pourvu d'une ouverture circulaire obturée par ladite membrane souple et étanche (34) et il comporte des orifices d'admission (44) et d'évacuation (46) pour le gaz neutre qui est introduit sous pression entre les parois dudit boîtier et le compensateur, lesdits moyens (38) de détection d'une augmentation de débit dudit gaz neutre étant positionnés sur ledit boîtier.

3. Four selon la revendication 1 ou 2, **caractérisé en ce que** les moyens permettant l'arrêt immédiat de la circulation du gaz de refroidissement dans les gaines (16, 18, 24, 26, 26') de recirculation de ce gaz de refroidissement rapide sont réalisés sous la forme d'un système de registre, placé en amont des échangeurs (28, 28'), sur la section de passage du gaz de refroidissement et d'actionneur, à temps de réponse très court, inférieur à cinq secondes, qui commandent ledit système de registre afin de fermer ladite section de passage sous la commande du détecteur (38).

4. Four selon l'une quelconque des revendications précédentes, **caractérisé en ce que** ladite membrane (34) est une membrane textile.

5. Four selon la revendication 4, **caractérisé en ce que** ladite membrane textile (34) est réalisée en silicone armé de fibres de verre.

## Patentansprüche

1. Schnellkühlofen, der Teil einer Anlage sein kann, die verschiedene Behandlungsstationen, insbesondere zur Wärmebehandlung von Banderzeugnissen, umfaßt und durch welchen ein Metallband (12) kontinuierlich durchläuft, wobei die schnelle Abkühlung durch Blasen eines Gasstrahls aus einer Atmosphäre, die aus einem Stickstoff-Wasserstoff-Gemisch besteht, das einen Wasserstoffgehalt von über 15 % und vorzugsweise von etwa 50 % aufweist, auf das Band erhalten wird und die Rückführung des Atmosphärengases mittels eines Kreislaufs aus Rezirkulationsleitungen (16, 18, 26, 26', 24) sichergestellt wird, der Ausgleichsrohrverbindungen (30), die in Form eines Wellrohrs ausgeführt sind, das die Ausdehung des Rohrsystems ermöglicht, mindestens ein Gebläse (20) sowie mindestens einen Gas/Wasser-Austauscher (28, 28') enthält, **dadurch gekennzeichnet, daß** der Ofen (10) eine Sicherheitseinrichtung umfaßt, welche es erlaubt, im Falle eines Risses in einer Welle einer Ausgleichsrohrverbindung (30) bzw. im Falle eines Austritts aus dieser einen Luftzutritt in den Rezirkulationskreislauf des Kühlgases oder dessen Austritt in die Umgebung zu verhindern, wobei diese Einrichtung in Form einer nachgiebigen, für das Kühlgas undurchlässigen, um die jeweilige Ausgleichsrohrverbindung (30) der Rezirkulationsleitung angeordneten Membran (34) ausgeführt ist und außerdem ein Mittel (38) zum sofortigen Auslösen der Unterbrechung des Strömens des Kühlgases in seinem Rezirkulationskreislauf vorgesehen ist, **und daß** das System für die Detektion eines Risses in einer Welle der Ausgleichsrohrverbindung (30) oder eines Austritts aus dieser in Form eines Kreislaufs eines neutralen Druckgases, vorzugsweise Stickstoff, im Zwischenraum (36) ausgeführt ist, der zwischen der Ausgleichsrohrverbindung und der nachgiebigen, undurchlässigen Membran (34) eingeschlossen ist, die sie umgibt, wobei außerdem an diesem Zwischenraum Mittel (38) zur Detektion einer Vergrößerung des Durchsatzes des neutralen Gases, welche auf einen Austritt von Kühlgas aus der Ausgleichsrohrverbindung folgt, vorgesehen sind, um eine Unterbrechung der Strömung dieses Gases in den Rezirkulationsleitungen auszulösen.

2. Ofen nach Anspruch 1, **dadurch gekennzeichnet, daß** jede Ausgleichsrohrverbindung (30) mit einem Metallgehäuse (40), vorzugsweise aus Stahl mit der Form einer kreisrunden Krone, ausgestattet ist, welches die Wellen der Ausgleichsrohrverbindung umgibt, mit einer kreisförmigen Öffnung versehen ist, die von der nachgiebigen, undurchlässigen Membran (34) verschlossen wird, und Öffnungen für die Zuleitung (44) und die Ableitung (46) des neutralen Gases enthält, das unter Druck zwischen die Wände von Gehäuse und Ausgleichsrohrverbindung geleitet wird, wobei die Mittel (38) für die Detektion einer Vergrößerung des Durchsatzes an neutralem Gas an diesem Gehäuse angebracht sind.

3. Ofen nach Anspruch 1 oder 2, **dadurch gekennzeichnet, daß** die Mittel, welche die sofortige Unterbrechung des Strömens des Kühlgases in den Rezirkulationsleitungen (16, 18, 24, 26, 26') dieses für eine schnelle Abkühlung sorgenden Gases ermöglichen, in Form eines Registersystems, das in Strömungsrichtung hinter den Austauschern (28, 28') auf dem Durchgangsquerschnitt des Kühlgases angeordnet ist, und eines Aktors mit einer sehr kurzen Reaktionszeit - von weniger als fünf Sekunden - ausgeführt sind, welche das Registersystem steuern, um den Durchgangsquerschnitt auf Befehl des Detektors (38) zu schließen.

4. Ofen nach einem der vorhergehenden Ansprüche, **dadurch gekennzeichnet, daß** die Membran (34) eine textile Membran ist.

5. Ofen nach Anspruch **4**, **dadurch gekennzeichnet, daß** die textile Membran (34) aus glasfaserverstärktem Silicon hergestellt ist.

## Claims

1. A fast-cooling furnace which may be part of an installation comprising various treatment stations, particularly for heat treatment of strip material, and in which a metal strip (12) moves around continuously, fast cooling being obtained by blowing a jet of atmospheric gas onto the strip, the gas being a mixture of nitrogen and hydrogen with a hydrogen content of over 15% and preferably near 50%, the atmospheric gas being recirculated by means of a circuit of recirculation tubes (16, 18, 26, 26', 24) including compensators (30) in the form of a series of corrugations which enable the set of tubes to expand, at least one fan (20) and at least one gas/water exchanger (28, 28'), this furnace (10) being **characterised in that** it comprises a safety device for preventing the introduction of air inside the circuit for recirculation of cooling gas or any escape thereof into the environment in the event of a breakage of a corrugation of a compensator (30) or in the event of an escape thereof, this device being in the form of a flexible membrane (34) which is impermeable to the cooling gas, said membrane being disposed round each of the compensators (30) of the recirculation tube, a means (38) also being provided to immediately trigger the interruption in the circulation of cooling gas in its recirculation circuit, and **in that** the system for detecting the breakage of a corrugation of the compensator (30) or an escape thereof is in the form of a circulation of a neutral gas under pressure, preferably nitrogen, in the chamber (36) between the compensator and the impermeable flexible membrane (34) surrounding it, means (38) also being provided on this chamber to detect any increase in the flow rate of this neutral gas following an escape of the cooling gas through the compensator in order to trigger the stoppage of the circulation of said gas in the recirculation tubes.

2. Furnace according to claim 1, **characterised in that** each compensator (30) is provided with a metal housing (40) preferably made of steel in the form of a circular collar surrounding the corrugations of said compensator, this housing being provided with a circular opening sealed by said flexible impermeable membrane (34) and comprising inlet orifices (44) and outlet orifices (46) for the neutral gas which is introduced under pressure between the walls of said housing and the compensator, said means (38) for detecting an increase in the flow rate of said neutral gas being positioned on said housing.

3. Furnace according to either claim 1 or claim 2, **characterised in that** the means for immediate interruption of the circulation of the cooling gas in the tubes (16, 18, 24, 26, 26') for recirculating this fast-cooling gas are in the form of a register system, arranged upstream of the exchangers (28, 28'), on the duct section for the cooling gas and the actuator, having a very short response time, below 5 seconds, which control said register system in order to close said duct section under the control of the detector (38).

4. Furnace according to any of the preceding claims, **characterised in that** said membrane (34) is a textile membrane.

5. Furnace according to claim 4, **characterised in that** said textile membrane (34) is made of glass fibre-reinforced silicone.
